# EUROPÄISCHE PATENTSCHRIFT

(11) **EP 4 494 319 B1**
(45) Veröffentlichungstag und Bekanntmachung des Hinweises auf die Patenterteilung: **12.11.2025**
(21) Anmeldenummer: 24703734.4
(22) Anmeldetag: 02.02.2024
(51) Int. Cl.: H04L 12/40

(54) **INFORMATIONSTECHNISCHES-SYSTEM, FAHRZEUG UND VERFAHREN ZUM EINBRINGEN EINER AKTUALISIERUNG AUF EIN ZIELSYSTEM**
INFORMATION TECHNOLOGY SYSTEM, VEHICLE AND METHOD FOR INTRODUCING AN UPDATE TO A TARGET SYSTEM
SYSTÈME DE TECHNOLOGIE D'INFORMATIONS, VÉHICULE ET PROCÉDÉ D'INTRODUCTION D'UNE MISE À JOUR DANS UN SYSTÈME CIBLE

(30) Priorität: 20.02.2023 DE 102023000563
(43) Veröffentlichungstag der Anmeldung: 22.01.2025
(73) Patentinhaber: Mercedes-Benz Group AG, 70372 Stuttgart (DE)
(72) Erfinder: WILMER, Thorsten, 71063 Sindelfingen (DE)
(74) Vertreter: Novagraaf Group
(86) Internationale Anmeldenummer: PCT/EP2024/052671
(87) Internationale Veröffentlichungsnummer: WO 2024/175334

(56) Entgegenhaltungen:
- US-A1- 2016 280 023
- US-A1- 2019 047 579
- US-A1- 2021 150 757

## Beschreibung

Die Erfindung betrifft ein Informationstechnisches-System nach der im Oberbegriff von Anspruch 1 näher definierten Art, ein Fahrzeug sowie ein Verfahren zum Einbringen einer Aktualisierung auf ein Zielsystem nach der im Oberbegriff von Anspruch 8 näher definierten Art.

Mit zunehmender Digitalisierung nimmt auch die Relevanz von Rechnersystemen für den Einsatz in Fahrzeugen zu. Moderne Fahrzeuge verfügen heutzutage über eine Vielzahl unterschiedlicher Steuergeräte, beispielsweise zum Steuern des Verbrennungsablaufs eines Verbrennungsmotors, zum Einstellen des Fahrwerks mit einer aktiven Federung sowie zur Bereitstellung von Fahrerassistenzsystemen, wie beispielsweise eines adaptiven Abstandstempomaten, eines Fernlichtassistenten und dergleichen. Mit zunehmendem Automatisierungsgrad müssen entsprechende Steuergeräte mehr Daten in kürzerer Zeit verarbeiten. Entsprechend steigt der Rechenbedarf. So ist es erforderlich zur Bereitstellung einer vollautomatisierten oder gar autonomen Fahrfunktion modernste Grafikprozessoren in Fahrzeuge zu integrieren, die in kurzer Zeit eine Vielzahl an Matrizenoperationen berechnen können.

Über die Lebensdauer eines Fahrzeugs hinweg kann es mehrmals erforderlich sein die von entsprechenden Steuergeräten ausführbaren Programme zu aktualisieren. Hierbei kann es sich sowohl um die Firmware eines Steuergeräts handeln, als auch um ein auf einem entsprechenden Steuergerät ausgeführtes Anwendungsprogramm. Neben dem Austauschen einzelner Codeabschnitte sowie dem Einbringen gänzlich neuer Codeabschnitte können auch dabei Parametersätze ausgetauscht werden. Beispielsweise kann der Parameter eines Nässesensors geändert werden, sodass ein automatisch aktivierbarer Scheibenwischer erst bei einer größeren Niederschlagsmenge aktiviert wird. Ebenfalls können Kennfelder angepasst werden, beispielsweise das Drehzahlkennfeld einer Ölförderpumpe in Abhängigkeit einer Öltemperatur. Durch das Einbringen entsprechender Updates in besagte Rechnersysteme im Fahrzeug lassen sich zudem neue Funktionen implementieren und Sicherheitslücken schließen.

Es ist wünschenswert entsprechende Updates möglichst schnell auf besagte Rechnersysteme zu installieren. Während des Einspielens eines Updates steht gegebenenfalls das Rechnersystem nicht zur Verfügung, sodass die vom Rechnersystem bereitzustellende Funktionalität nicht genutzt werden kann. Ein Fahrzeugnutzer muss dementsprechend warten, was den Komfort reduziert. Zudem sollten besonders sicherheitsrelevante Updates schnell installiert werden, um zu verhindern, dass ein Angreifer, beispielsweise ein Hacker, ein besagtes Rechnersystem korrumpiert. Je größer ein Update ist, also je mehr Daten einzubringen sind, desto dringlicher ist das Erfordernis für eine Beschleunigung zu sorgen.

Die Kommunikation mit den in einem Fahrzeug verbauten Rechnersystemen ist auf vielfältige Art und Weise möglich. Fahrzeuge verfügen typischerweise über eine On-bord-Diagnoseschnittstelle, über die die Kommunikation eines fahrzeugexternen Rechnersystems mit den fahrzeuginternen Rechnersystemen abgewickelt wird. Dabei werden spezielle Kommunikationsprotokolle genutzt, wie beispielsweise das durch die ISO 14229 beschriebene Kommunikationsprotokoll *Unified Diagnostic Services.* Ein fahrzeugexternes Rechnersystem, beispielsweise ein Desktopcomputer, Laptop oder Tabletcomputer, kann kabelgebunden, beispielsweise per USB oder Ethernet, oder auch drahtlos, beispielsweise per Bluetooth oder Wi-Fi, mit einem entsprechenden fahrzeuginternen Rechnersystem gekoppelt werden. Zur Erhöhung des Nutzerkomforts können Updates auch per Mobilfunk in ein Fahrzeug eingebracht werden. Somit muss ein Fahrzeugnutzer nicht mehr eine Werkstatt aufsuchen oder händisch auf einem Desktopcomputer über das Internet ein Update herunterladen, dieses auf einen USB-Stick aufspielen und den USB-Stick dann in eine entsprechende Buchse im Fahrzeug einstecken, damit das Update installiert werden kann. So greift stattdessen das Fahrzeug mit einer Telematikeinheit über Mobilfunk auf einen entsprechenden Server eines Fahrzeugherstellers zu und lädt das Update herunter.

Die Interaktion zwischen fahrzeuginternen und fahrzeugexternen Rechnersystemen stellt ein innovatives Umfeld dar. So beschreibt beispielsweise die DE 10 2012 110 559 A1 ein Verfahren zum sicheren Herunterladen einer Firmware unter Verwendung eines Diagnoselinkkonnektors und dem OnStar-System. Zur Erhöhung der Cybersicherheit wird die auf ein fahrzeuginternes Rechnersystem zu implementierende Firmware von zwei unterschiedlichen Akteuren, und somit doppelt, signiert.

Ferner beschreibt die DE 10 2019 216 841 A1 eine Fahrzeugdiagnostikkommunikationseinrichtung sowie ein dieselbe enthaltendes System. Die Fahrzeugdiagnostikkommunikationseinrichtung ist dabei dazu eingerichtet eine Zeit einer durchzuführenden Diagnose abzuschätzen.

In der US 7 787 481 B1 wird ein Netzwerkschnittstellensystem offenbart, welches für den Austausch von Daten einen Zentralrechner mit einem Netzwerk verbindet. Das Netzwerkschnittstellensystem umfasst ein Speichersystem und ein Medienzugriffskontrollsystem mit zumindest einem lokalen Zwischenspeicher, welches dazu ausgelegt ist, eine zweite Datenstruktur von dem Speichersystem zu lesen während eine erste Datenstruktur zu dem Netzwerk übertragen wird. Hierdurch soll insbesondere der Zugriff mehrerer mit dem Netzwerk verbundenen Endgeräte auf das Speichersystem verbessert werden.

Die US 2014/0019571 A1 beschreibt ein Verfahren zur Verarbeitung von Datenpaketen aus einer Empfangs-Warteschlange für Datenpakete in einem Gerät für den Speicherzugriff. In Abhängigkeit von der Nutzung der Empfangs-Warteschlange beim Zugriff von Programmen auf Datenpakete wird die Nutzung einer weiteren Warteschlange vorgeschlagen, welche zum heuristisch vorausschauenden Zwischenspeichern von Datenpaketen vorgesehen ist.

Ferner offenbart die US 2021/0150757 A1 das Training und die Inferenz unter Nutzung eines neuronalen Netzwerks zur Vorhersage der Orientierung von Objekten in Bildern. Dabei wird ein Prozessor beschrieben, der dazu in der Lage ist, das Training für ein oder mehrere künstliche neuronale Netzwerke zum Identifizieren der Orientierung von Objekten in Bildern unter Berücksichtigung einer von der Orientierung des Objekts abweichenden Eigenschaft zu unterstützen. Dabei können vom Prozessor Bilder verarbeitet werden, die kein Label als Grundwahrheit für das respektive künstliche neuronale Netzwerk umfassen. Als alternative Eigenschaft jeweiliger Objekte kann eine symmetrische Konsistenz zwischen dem Ausgangsbild und einem gespiegelt Bild verwendet werden. Unter Verwendung eines Diskriminators und eines Generators kann eine Ansicht des Objekts von einem alternativen Blickpunkt aus künstlich generiert werden.

Ferner offenbart die US 2016/0280023 A1 ein Deichselsteuerungssystem.

Zudem offenbart die US 2019/0047579 A1 einen eng gekoppelten Verriegelungsschritt für Prozessorkerne zur Erhöhung der funktionalen Sicherheit.

Der vorliegenden Erfindung liegt die Aufgabe zugrunde ein verbessertes Informationstechnisches-System anzugeben, mit dessen Hilfe das Einbringen von Aktualisierungen in ein Rechnersystem beschleunigt werden kann.

Erfindungsgemäß wird diese Aufgabe durch ein Informationstechnisches-System mit den Merkmalen des Anspruchs 1 gelöst. Vorteilhafte Ausgestaltungen und Weiterbildungen sowie ein Fahrzeug umfassend einen Teil eines besagten Informationstechnischen-Systems sowie ein Verfahren zum Einbringen einer Aktualisierung auf ein Zielsystem ergeben sich aus den hiervon abhängigen Ansprüchen.

Ein gattungsgemäßes Informationstechnisches-System, umfassend:
- ein Quellsystem, wiederum aufweisend einen Quell-Informationsspeicher sowie ein Dateilesemodul und ein Systemschnittstellenmodul; und
- ein Zielsystem, wiederum aufweisend einen Ziel-Informationsspeicher sowie ein Systemschnittstellenmodul, ein Nutzlastpuffermodul und ein Speicherzugangsmodul; wobei
- das Quellsystem und das Zielsystem über eine bidirektionale Datenleitung miteinander kommunikativ gekoppelt sind;
- das Quellsystem dazu eingerichtet ist nach dem Empfangen einer Antwortnachricht vom Zielsystem mittels des Dateilesemoduls den Quell-Informationsspeicher auszulesen, aus dem Quell-Informationsspeicher ausgelesene Informationen zu einem Datentransferblock zu packen und diesen über die Datenleitung an das Zielsystem zu übersenden; wobei
- das Quellsystem zum Auslesen des Quell-Informationsspeichers und Packen des Datentransferblocks eine erste Latenzzeit benötigt;
- das Zielsystem dazu eingerichtet ist den Datentransferblock zu empfangen, die darin enthaltenen Informationen zu extrahieren und in das Nutzlastpuffermodul zu schreiben, daraufhin eine Antwortnachricht zu erzeugen und mittels des Speicherzugangsmoduls die Informationen aus dem Nutzlastpuffermodul in den Ziel-Informationsspeicher zu übertragen; wobei
- das Zielsystem zum Extrahieren und Schreiben der Informationen sowie zum Erzeugen der Antwortnachricht eine zweite Latenzzeit benötigt;
wird erfindungsgemäß dadurch weitergebildet, dass
- das Quellsystem und/oder das Zielsystem ferner jeweils ein Datentransferbeschleunigungsmodul umfassen, wiederum aufweisend einen Datentransferblockpuffer; wobei
- das Datentransferbeschleunigungsmodul im Quellsystem zwischen Datenleitung und Systemschnittstellenmodul angeordnet ist und dazu eingerichtet ist einen ersten Datentransferblock zu empfangen und über die Datenleitung zu versenden, nach Empfangen eines Datentransferblocks selbst eine Antwortnachricht an das Systemschnittstellenmodul auszugeben, um das Packen wenigstens eines weiteren Datentransferblocks zu bewirken, den weiteren Datentransferblock im Datentransferblockpuffer zwischenzuspeichern und einen im Datentransferblockpuffer zwischengespeicherten weiteren Datentransferblock nach Empfangen einer Antwortnachricht vom Zielsystem an dieses zu übersenden; und wobei
- das Datentransferbeschleunigungsmodul im Zielsystem zwischen Datenleitung und Systemschnittstellenmodul angeordnet ist und dazu eingerichtet ist einen ersten Datentransferblock zu empfangen und an das Systemschnittstellenmodul weiterzuleiten, nach Empfangen eines Datentransferblocks selbst eine Antwortnachricht auszugeben und diese über die Datenleitung zu versenden, um das Übersenden wenigstens eines weiteren Datentransferblocks vom Quellsystem an das Zielsystem zu bewirken, wenigstens einen weiteren Datentransferblock im Datentransferblockpuffer zwischenzuspeichern und nach Empfangen einer Antwortnachricht vom Systemschnittstellenmodul einen weiteren Datentransferblock an das Systemschnittstellenmodul weiterzuleiten oder nach Empfangen einer Negativ-Antwortnachricht vom Systemschnittstellenmodul die Negativ-Antwortnachricht über die Datenleitung zu versenden und sämtliche weiteren Datentransferblöcke aus dem Datentransferblockpuffer zu löschen.

Mit Hilfe des erfindungsgemäßen Informationstechnischen-Systems lässt sich die Zeitdauer zum Übertragen von Informationen aus dem Quellsystem in das Zielsystem verringern. Hintergrund ist dabei, dass während das Zielsystem arbeitet, also während der zweiten Latenzzeit, das Quellsystem untätig ist bzw. im Leerlauf ist. Das Quellsystem benötigt jedoch die erste Latenzzeit, um mittels des Dateilesemoduls den Quell-Informationsspeicher auszulesen und daraus einen entsprechenden Datentransferblock zu packen. Das erfindungsgemäße Informationstechnische-System ist derart ausgeführt, dass das Quellsystem, während das Zielsystem arbeitet, also während der zweiten Latenzzeit, ebenfalls aktiv ist, sodass die Wartedauer für das Zielsystem nach dem Aussenden der Antwortnachricht bis zum Erhalt eines entsprechenden weiteren Datentransferblocks vom Quellsystem verkürzt wird. Die erste Latenzzeit kann in einer Größenordnung von 100 ms liegen und die zweite Latenzzeit in einer Größenordnung von 600 ms. Für jeden zu übertragenden Datentransferblock lässt sich eine entsprechende Wartezeit reduzieren, beispielsweise in der Größenordnung von 200 bis 300 ms. Aufsummiert auf die Gesamtheit der vom Quellsystem an das Zielsystem zu übertragenden Datentransferblöcke ist hierdurch eine signifikante Zeitreduktion zum Einbringen entsprechender Daten bzw. Informationen ins Zielsystem möglich.

Je nach Ausführung des Quellsystems und Zielsystems kann die erste Latenzzeit auch größer sein als die zweite Latenzzeit.

Das Datentransferbeschleunigungsmodul lässt sich dabei sowohl ausschließlich im Quellsystem, ausschließlich im Zielsystem oder auch jeweils in beiden Systemen implementieren. Aufgrund der Anordnung zwischen Datenleitung und jeweiligem Systemschnittstellenmodul lässt sich das Datentransferbeschleunigungsmodul sehr leicht in das respektive System einbringen. Die Architektur des Quellsystems bzw. Zielsystems muss nicht angepasst werden, da das Datentransferbeschleunigungsmodul in entsprechender Datenflussrichtung jeweils dem Quellsystem bzw. Zielsystem vorgelagert ist.

Bei dem Informationstechnischen-System handelt es sich im Allgemeinen um einen Verbund aus Rechnersystemen. Entsprechend bilden das Quellsystem und das Zielsystem ein Rechnersystem aus. Ein jeweiliges Rechnersystem umfasst Hardware und/oder Softwarekomponenten. Dabei kann es sich jeweils um eine beliebige Rechenvorrichtung handeln wie einen Desktopcomputer, Laptop, Tabletcomputer, Smartphone, ein eingebettetes System, beispielsweise ausgeführt als System-on-a-Chip, einen Server, eine Edge Computing Gerät und dergleichen.

Bei den aus dem Quellsystem in das Zielsystem zu übertragenden Informationen kann es sich um alle erdenklichen Informationen, das heißt Dateien und entsprechend Dateiformate, handeln. Es kann sich um Programmcode zur Ausbildung eines ausführbaren Programms wie eine Firmware oder ein Anwendungsprogramm handeln oder auch im von einem entsprechend ausführbaren Programm zu verarbeitende Informationen wie Parameter, Konstanten und dergleichen.

Beim Quell-Informationsspeicher und beim Ziel-Informationsspeicher handelt es sich jeweils um ein computerlesebares physisches Speichermedium. Hier kommen alle erdenklichen Ausführungen in Frage.

Das Dateilesemodul, ein jeweiliges Systemschnittstellenmodul, das Nutzlastpuffermodul und das Speicherzugangsmodul sind durch Hardware und/oder Software ausgebildet. Besonders bevorzugt handelt es sich um reine Softwaremodule. Mittels des Dateilesemoduls ist das Quellsystem dazu in der Lage zumindest lesend auf den Quell-Informationsspeicher zuzugreifen. Das Dateilesemodul kann auch als *File Reader* bezeichnet werden. Das Systemschnittstellenmodul dient als Verbindungsschnittstelle und kann auf Quellsystemseite auch als *Dialog Sequencer* bezeichnet werden. Im Zielsystem kann das Systemschnittstellenmodul auch als *Diagnosemodul* bezeichnet werden. Dies ist insbesondere dann der Fall, wenn es sich bei dem Zielsystem um ein Fahrzeugdiagnosekommunikationsmodul handelt. Das Nutzlastpuffermodul dient zum Zwischenspeichern der in den Ziel-Informationsspeicher zu schreibenden Informationen. Der Ziel-Informationsspeicher kann einen vom übrigen Zielsystem abweichenden Takt aufweisen. Um dem gerecht zu werden kann das Speicherzugangsmodul mit dem Takt des Ziel-Informationsspeichers arbeiten und somit asynchron Informationen aus dem Nutzlastpuffermodul auslesen. Das Speicherzugangsmodul kann auch als *Flash Access* bezeichnet werden.

Das Quellsystem und das Zielsystem können jeweils weitere Hardware- und/oder Softwaremodule enthalten, auf die hier nicht näher eingegangen wird.

Auch die jeweiligen Datentransferbeschleunigungsmodule können dabei alleinig durch Hardware, alleinig durch Software oder durch eine Kombination von Hard- und Software ausgebildet sein.

Bei der bidirektionalen Datenleitung kann es sich um eine kabelgebundene oder drahtlose Datenleitung handeln. Eine kabelgebundene Datenleitung kann beispielsweise durch ein Ethernet-Kabel oder USB-Kabel ausgebildet sein. Entsprechende Kommunikationsprotokolle werden verwendet. Bei der Datenleitung kann es sich auch um einen direkten Zugriff auf ein Bus-System handeln wie beispielsweise einen CAN-Bus.

Eine drahtlose Datenleitung wird beispielsweise ausgebildet von einer NFC-Verbindung, Bluetooth-Verbindung, Wi-Fi-Verbindung oder dergleichen. Ebenfalls kommt als drahtlose Datenleitung eine Mobilfunkverbindung in Frage.

Die vom Zielsystem ausgegebene Antwortnachricht dient dazu das Quellsystem darüber zu informieren, dass das Zielsystem nun bereit ist zum Empfangen eines weiteren Datentransferblocks.

Ein Datentransferblock lässt sich auch als Nachricht beschreiben. Diese Nachricht bzw. der Datentransferblock umfasst einen oder mehrere Kopfzeilen oder *Header,* die Informationen enthalten, wie der jeweilige Datentransferblock auf dem Zielsystem weiter zu verarbeiten ist. Ferner ist eine sogenannte Nutzlast oder *Payload* Bestandteil der entsprechenden Nachricht, also des Datentransferblocks. Bei dem Payload handelt es sich um die eigentlichen in den Ziel-Informationsspeicher zu schreibenden Informationen. Beim Durchwandern des Datentransferblocks durch die einzelnen Module auf dem Zielsystem werden von jedem Modul nach und nach Teile des Headers entfernt, bis schließlich der Payload im Nutzlastpuffermodul und anschließend im Speicherzugangsmodul bzw. im Ziel-Informationsspeicher landet.

Die Größe des Datentransferblockpuffers kann beliebig ausgestaltet sein. Dabei kann die Größe des Datentransferblockpuffers des Datentransferbeschleunigungsmoduls im Quellsystem und des Datentransferbeschleunigungsmoduls im Zielsystem gleich groß sein oder auch abweichend. Beispielsweise ist der Datentransferblockpuffer so groß, dass zumindest zehn Datentransferblöcke in ihn geschrieben werden können.

Das Zielsystem ist dazu in der Lage eine Negativ-Antwortnachricht zu erzeugen und an das Quellsystem zu versenden, mit der dem Quellsystem mitgeteilt wird, dass das Zielsystem nun keine weiteren Datentransferblöcke mehr empfangen kann. Entsprechend kann ein im Quellsystem implementiertes Datentransferbeschleunigungsmodul eine solche Negativ-Antwortnachrichten verarbeiten. In diesem Falle kann auch der Datentransferblockpuffer des Datentransferbeschleunigungsmoduls im Quellsystem geleert werden. Das Dateilesemodul und das Systemschnittstellenmodul im Quellsystem werden dann entsprechend vom Datentransferbeschleunigungsmodul instruiert, so lange keine weiteren Datentransferblöcke mehr zu erzeugen, bis erneut eine Antwortnachricht vom Zielsystem empfangen wurde.

Eine vorteilhafte Weiterbildung des Informationstechnischen-Systems sieht vor, dass das Datentransferbeschleunigungsmodul im Quellsystem und/oder im Zielsystem ferner dazu eingerichtet ist so lange Antwortnachrichten auszugeben, bis der jeweilige Datentransferblockpuffer voll ist. Hierdurch lässt sich die erforderliche Zeitdauer zum Übertragen der Informationen aus dem Quellsystem in das Zielsystem noch weiter reduzieren. So kann mit anderen Worten das jeweilige Datentransferbeschleunigungsmodul unabhängig von der Arbeitsweise des Zielsystems durchgehend arbeiten, solange bis der jeweilige Datentransferblockpuffer gefüllt ist.

Entsprechend einer weiteren vorteilhaften Ausgestaltung des Informationstechnischen-Systems sind das Quellsystem und das Zielsystem dazu eingerichtet Unified Diagnostic Services als Kommunikationsprotokoll zu verwenden. Dies ermöglicht die Verwendung des Informationstechnischen-Systems im Automotive Umfeld. Bei dem Zielsystem kann es sich dann beispielsweise um die Rechnerarchitektur in einem Fahrzeug handeln bzw. Teile der Rechnerarchitektur bilden das Zielsystem aus. Das Zielsystem lässt sich dann vom Quellsystem umgangssprachlich ausgedrückt per Fahrzeugdiagnose ansprechen. Bei dem Quellsystem handelt es sich in diesem Falle um einen entsprechenden Entwicklerrechner bzw. auf einem solchen ausgeführte Software. In diesem Zusammenhang wird das Quellsystem auch als Tester bezeichnet. Das Zielsystem wird in diesem Zusammenhang als Target bezeichnet. Beispielsweise ist das Quellsystem als DTS9 Entwicklungstester ausgeführt.

Eine weitere vorteilhafte Ausgestaltung des erfindungsgemäßen Informationstechnischen-Systems sieht ferner vor, dass der Quell-Informationsspeicher und/oder der Ziel-Informationsspeicher Flashspeicher umfasst. Flashspeicher lässt sich besonders schnell ansprechen und umfasst keine beweglichen Teile, die einen Zugriff bei Erschütterungen, beispielsweise wenn ein entsprechendes Fahrzeug über Bodenwellen fährt, erschweren könnten. Somit eignet sich Flashspeicher besonders zur Ausbildung besagten Quell-Informationsspeichers und/oder Ziel-Informationsspeichers. Der Flashspeicher kann im Quellsystem und/oder im Zielsystem fest verbaut sein, oder es kann sich um ein lösbares Speichermodul handeln, wie beispielsweise eine M.2 SSD, eine SD-Karte oder dergleichen.

Entsprechend einer weiteren vorteilhaften Ausgestaltung des Informationstechnischen-Systems ist das Zielsystem als eingebettetes System ausgeführt. Das Zielsystem kann dabei eine oder auch mehrere Recheneinheiten aufweisen. Bei einer solchen Recheneinheit handelt es sich beispielsweise um ein System-on-a-Chip, auch als SoC bezeichnet. Das Zielsystem kann beispielsweise in ein Fahrzeug eingebettet sei. Das Zielsystem bzw. die das Zielsystem ausbildende(n) Recheneinheit(en) können dabei von Steuergeräten des Fahrzeugs ausgebildet sein.

Bevorzugt ist das Quellsystem als Server oder Serverbund ausgeführt und es verläuft zumindest ein Teil der Datenleitung durch das Internet. Das Zielsystem kann beispielsweise per Mobilfunk an das Internet angeschlossen sein. Dies ermöglicht es dem Zielsystem Informationen vom Server bzw. Serververbund zu empfangen. Der Server kann von einem Fahrzeughersteller betrieben werden oder genutzt werden. Somit können Informationen vom Fahrzeughersteller an die Fahrzeuge seiner Fahrzeugflotte verteilt werden. Dank der Nutzung des Internets und insbesondere einer mobilen Anbindung der Fahrzeuge an das Internet müssen diese dann keine Werkstatt aufsuchen, um besagte Informationen zu empfangen.

Bei einem erfindungsgemäßen Fahrzeug ist ein im vorigen beschriebenes Zielsystem Teil des Fahrzeugs bzw. in einem besagten Fahrzeug implementiert. Das Fahrzeug umfasst also zumindest ein Datentransferbeschleunigungsmodul. Bei dem Fahrzeug kann es sich um ein beliebiges Fahrzeug wie einen Pkw, Lkw, Transporter, Bus oder dergleichen handeln. Anstelle eines Straßenfahrzeugs könnte es sich auch um ein Schienenfahrzeug, Wasserfahrzeug oder Luftfahrzeug handeln.

Ferner wird ein Verfahren zum Einbringen einer Aktualisierung auf ein Zielsystem unter der Nutzung eines im vorigen beschriebenen Informationstechnischen-Systems beschrieben. Erfindungsgemäß sieht das Verfahren vor mittels der Aktualisierung einen Parameterdatensatz, ein Anwendungsprogramm und/oder eine Firmware im Zielsystem anzupassen oder neu in dieses einzubringen.

Mittels des erfindungsgemäßen Verfahrens ist es möglich die erforderliche Zeitdauer zum Einbringen besagter Aktualisierung auf dem Zielsystem zu reduzieren. Dies ist möglich durch die Funktionsweise des im verwendeten Informationstechnischen-Systems enthaltenen Datentransferbeschleunigungsmoduls.

Weitere vorteilhafte Ausgestaltungen des erfindungsgemäßen Informationstechnischen-Systems und des Verfahrens zum Einbringen der Aktualisierung auf das Zielsystem ergeben sich auch aus den Ausführungsbeispielen, welche nachfolgend unter Bezugnahme auf die Figuren näher beschrieben werden.

Dabei zeigen:
- Fig. 1: eine schematisierte Darstellung eines aus dem Stand der Technik bekannten Informationstechnischen-Systems;
- Fig. 2: eine schematisierte Darstellung eines erfindungsgemäßen Informationstechnischen-Systems mit einem auf einem Quellsystem implementierten Datentransferbeschleunigungsmodul;
- Fig. 3: eine schematisierte Darstellung eines erfindungsgemäßen Informationstechnischen-Systems mit einem auf einem Zielsystem implementierten Datentransferbeschleunigungsmodul;
- Fig. 4: eine schematisierte Darstellung eines erfindungsgemäßen Informationstechnischen-Systems mit je einem auf dem Quellsystem und dem Zielsystem implementierten Datentransferbeschleunigungsmodul; und
- Fig. 5: eine schematisierte Darstellung des in Fig. 4 gezeigten Informationstechnischen-Systems, bei dem der Datentransferblockpuffer beider Datentransferbeschleunigungsmodule vollläuft.

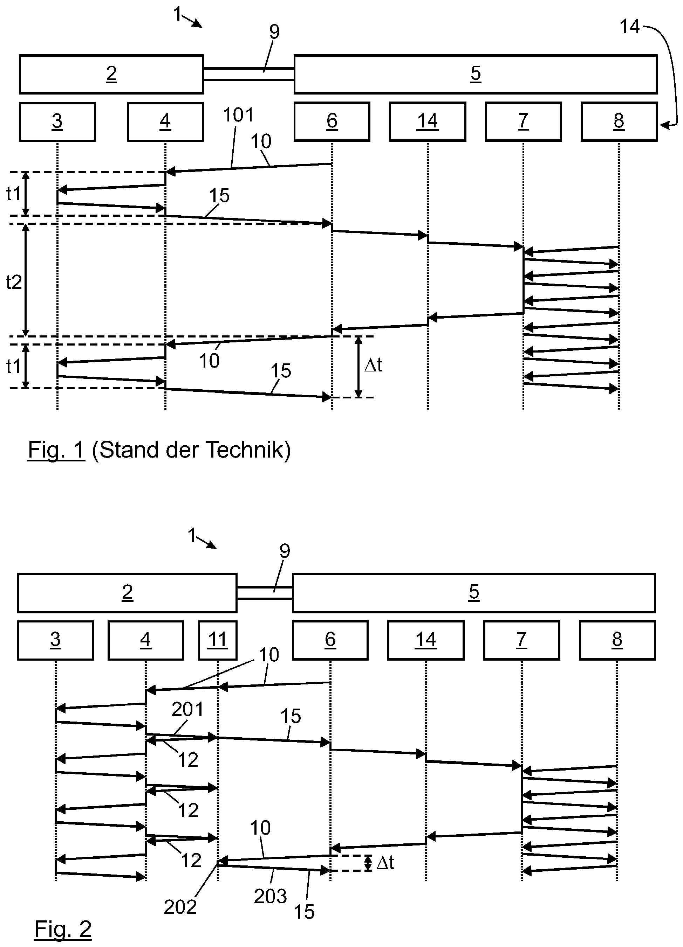

Figur 1 zeigt ein aus dem Stand der Technik bekanntes Informationstechnischen-System 1. Dieses umfasst ein Quellsystem 2, welches über eine Datenleitung 9 in bidirektionaler Kommunikationsverbindung steht zu einem Zielsystem 5. Das Quellsystem 2 wiederum umfasst ein Dateilesemodul 3 und ein Systemschnittstellenmodul 4. Das Zielsystem 5 wiederum umfasst ebenfalls ein Systemschnittstellenmodul 6, ein Nutzlastpuffermodul 7 und ein Speicherzugangsmodul 8. Die jeweiligen Module werden durch Hardware und/oder Software ausgebildet. Das Quellsystem 2 und das Zielsystem 5 können ebenfalls durch Hardwarekomponenten und/oder Softwarekomponenten ausgebildet sein. In dem in den Figuren gezeigten Ausführungsbeispielen sind die entsprechenden Module als Softwaremodul 14 ausgeführt. Wie beispielhaft für das Zielsystem 5 dargestellt, können Quellsystem 2 und Zielsystem 5 auch weitere Softwaremodule 14 aufweisen.

Die Figuren zeigen jeweils Ausschnitte aus dem Ablauf der Datenübertragung zwischen Quellsystem 2 und Zielsystem 5. So gilt es aus einem vom Quellsystem 2 umfassten Quell-Informationsspeicher Informationen über die Datenleitung 9 an einen Ziel-Informationsspeicher des Zielsystems 5 zu übertragen. Dabei verfügt das Dateilesemodul 3 zumindest über Lesezugriff und das Speicherzugangsmodul 8 zumindest über Schreibzugriff auf den respektiven Informationsspeicher. Das Dateilesemodul 3 und das Speicherzugangsmodul 8 können beide auch über Lese- und Schreibzugriff verfügen.

Sobald das Zielsystem 5 zum Empfangen von Informationen bereit ist, sendet das Zielsystem 5 über das Systemschnittstellenmodul 6 eine Antwortnachricht 10 an das Systemschnittstellenmodul 4 des Quellsystems 2. Die Datenübertragung erfolgt dabei nicht instantan, sondern mit einer gewissen Latenzzeit, sodass ein entsprechender die Antwortnachricht 10 symbolisierender Pfeil 101 in Figur 1 nicht nur nach links sondern auch nach unten zeigt. Das Quellsystem 2 benötigt eine erste Latenzzeit t1, um die entsprechende Anfrage bzw. Aufforderung des Zielsystems 5 zu verarbeiten. So vermittelt das Systemschnittstellenmodul 4 zum Dateilesemodul 3, welches auf den Quell-Informationsspeicher zugreift. Aus dem Quell-Informationsspeicher ausgelesene Informationen werden dann zu einem Datentransferblock gepackt. Die jeweilige Verarbeitungszeit des Dateilesemoduls 3 und des Systemschnittstellenmoduls 4 sind durch vertikale Striche angedeutet. Die Dateiübertragung zwischen Dateilesemodul 3 und Systemschnittstellenmodul 4 geht ebenfalls mit einer gewissen Latenz einher, sodass auch hier die Pfeile in die vertikale Richtung gekippt sind.

Das Quellsystem 2 versendet einen jeweiligen Datentransferblock mittels einer Informationsnachricht 15 an das Zielsystem 5.

Das Zielsystem 5 benötigt zum Verarbeiten der Informationsnachricht 15, sprich zum Verarbeiten des Datentransferblocks, eine zweite Latenzzeit t2. Die zweite Latenzzeit t2 wird gemessen zwischen dem Empfangen der Informationsnachricht 15 vom Systemschnittstellenmodul 6 und dem Ausgeben der Antwortnachricht 10 durch das Systemschnittstellenmodul 6. Die Informationsnachricht 15 umfasst einen Kopf und eine Nutzlast, wobei der Kopf Informationen enthält, welche beschreiben wie die Informationsnachricht 15 auf dem Zielsystem 5 verarbeitet werden soll. Bei der Nutzlast handelt es sich um die besagten aus dem Quell-Informationsspeicher ausgelesenen Informationen. Der Datentransferblock bzw. die Informationsnachricht 15 durchwandert sukzessive die einzelnen Softwaremodule 14 des Zielsystems 5, wobei dabei bei jedem Softwaremodul 14 ein Teil des Kopfes verarbeitet bzw. entfernt wird. Die übrigbleibende Nutzlast wird dann in das Nutzlastpuffermodul 7 geschrieben. Nach dem erfolgreichen Schreiben gibt das Zielsystem 5 eine Antwortnachricht 10 aus. Das Speicherzugangsmodul 8 greift asynchron auf das Nutzlastpuffermodul 7 zu, um die entsprechenden Informationen in den Ziel-Informationsspeicher zu schreiben. Daraufhin startet der im vorigen beschriebene Zyklus erneut.

Das Zielsystem 5 weist ferner eine erste Zeitdifferenz Δt zwischen dem Ausgeben der Antwortnachricht 10 und dem Empfangen des nächsten Datentransferblocks mittels der Informationsnachricht 15 auf.

Figur 2 zeigt ein erfindungsgemäßes Informationstechnischen-Systems 1, bei dem ein Datentransferbeschleunigungsmodul 11 in das Quellsystem 2 integriert ist. Auch hier übermittelt das Systemschnittstellenmodul 6 eine Antwortnachricht 10 an das Quellsystem 2, welche vom Datentransferbeschleunigungsmodul 11 an das Systemschnittstellenmodul 4 durchgereicht wird.

Entsprechend packt das Quellsystem 2 einen Datentransferblock und reicht diesen, angedeutet durch einen Pfeil 201, an das Datentransferbeschleunigungsmodul 11 weiter.

Das Datentransferbeschleunigungsmodul 11 reicht den entsprechenden Datentransferblock in Form einer Informationsnachricht 15 an das Systemschnittstellenmodul 6 des Zielsystems 5 weiter. Mit Hilfe des Datentransferbeschleunigungsmoduls 11 lässt sich jedoch verhindern, dass nun das Quellsystem 2 untätig wartet, bis erneut eine Antwortnachricht 10 vom Zielsystem 5 empfangen wird. So gibt das Datentransferbeschleunigungsmodul 11 selbst eine Antwortnachricht 12 aus, woraufhin erneut das Systemschnittstellenmodul 4 und das Dateilesemodul 3 aktiv werden und einen neuen Datentransferblock generieren. Dieser weitere Datentransferblock wird dann in einen vom Datentransferbeschleunigungsmodul 11 umfassten Datentransferblockpuffer zum Zwischenspeichern geschrieben. Dieser Ablauf erfolgt fortwährend, solange bis der Datentransferblockpuffer voll ist, bzw. bis keine Informationen mehr aus dem Quell-Informationsspeicher ausgelesen werden müssen.

Der Ablauf auf dem Zielsystem 5 ist analog zu dem in Figur 1 gezeigten Ausführungsbeispiel. Sobald das Zielsystem 5 jedoch erneut eine Antwortnachricht 10 an das Quellsystem 2 übermittelt, wird der Vorteil durch das Implementieren des Datentransferbeschleunigungsmoduls 11 im Quellsystem 2 erkenntlich. So muss nach Empfangen der Antwortnachricht 10 vom Quellsystem 2 nicht erst die erste Latenzzeit t1 gewartet werden, bis das Quellsystem 2 eine Informationsnachricht 15 an das Zielsystem 5 zurück übermittelt. Das Datentransferbeschleunigungsmodul 11 liest nämlich den weiteren Datentransferblock aus dem Datentransferblockpuffer aus und leitet diesen unmittelbar oder, wie in Figur 2 durch einen vergleichsweise kurzen vertikalen Strich 202 angedeutet, nach einer vergleichsweise kurzen Zeit mittels der Informationsnachricht 15, angedeutet durch einen Pfeil 203, an das Systemschnittstellenmodul 6 des Zielsystems 5 weiter.

Ein Vergleich von Figur 1 und Figur 2 zeigt, dass in diesem Falle die erste Zeitdifferenz Δt kürzer ist, als bei dem in Figur 1 dargestellten und aus dem Stand der Technik bekannten Informationstechnischen-System 1. Die Zeitersparnis summiert sich über alle zwischen dem Quellsystem 2 und dem Zielsystem 5 über die Datenleitung 9 auszutauschenden Datentransferblöcken, sodass die erforderliche Zeitdauer zum Übertragen der Informationen signifikant reduziert wird. So lassen sich beispielsweise Parameterdatensätze, eine Firmware oder ein Anwendungsprogramm schneller aktualisieren bzw. neu im Zielsystem 5 einbringen.

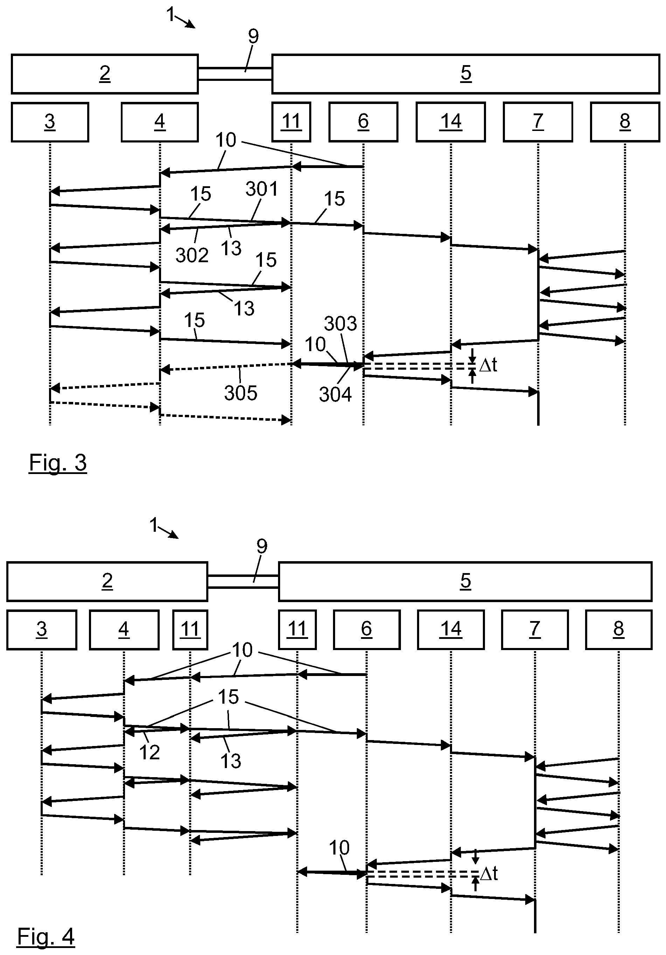

Figur 3 zeigt eine weitere mögliche Ausführungsform des erfindungsgemäßen Informationstechnischen-Systems 1. Hier ist ein Datentransferbeschleunigungsmodul 11 im Zielsystem 5 implementiert. Das Systemschnittellenmodul 6 gibt besagte Antwortnachricht 10 aus, welche vom Datentransferbeschleunigungsmodul 11 an das Quellsystem 2 weitergereicht wird. Nun wird entsprechend ein Datentransferblock durch das Quellsystem 2 generiert und in einer Informationsnachricht 15 an das Zielsystem 5 übermittelt, siehe Pfeil 301.

Den von der Informationsnachricht 15 umfassten Datentransferblock gibt das Datentransferbeschleunigungsmodul 11 an das Systemschnittstellenmodul 6 weiter. Der auf dem Zielsystem 5 folgende Ablauf ist analog zur Ausführung in Figur 1 und 2.

Zur Beschleunigung des Datentransfers sendet jedoch nun das Datentransferbeschleunigungsmodul 11 eine eigene Antwortnachricht 13, siehe Pfeil 302, an das Quellsystem 2. Daraufhin erzeugt das Quellsystem 2 einen weiteren Datentransferblock und übermittelt diesen über die Datenleitung 9 an das Datentransferbeschleunigungsmodul 11 des Zielsystems 5 zurück. Auch hier umfasst das Datentransferbeschleunigungsmodul 11 einen Datentransferblockpuffer, in welchem der somit empfangene Datentransferblock zwischengespeichert wird. Dieser Ablauf kann mehrmals hintereinander ablaufen, solange bis der Datentransferblockpuffer vollständig gefüllt ist oder keine weiteren Informationen mehr zwischen Quellsystem 2 und Zielsystem 5 mehr übertragen werden müssen.

Nach dem Schreiben der Nutzlast in das Nutzlastpuffermodul 7 gibt nun, angedeutet durch einen Pfeil 303, das Systemschnittstellenmodul 6 die Antwortnachricht 10 an das Datentransferbeschleunigungsmodul 11 weiter. Das Datentransferbeschleunigungsmodul 11 greift dann auf den Datentransferblockpuffer zu und ist dazu in der Lage, unmittelbar einen im Datentransferblockpuffer zwischengespeicherten weiteren Datentransferblock an das Systemschnittstellenmodul 6 zurück zu übermitteln, angedeutet durch einen Pfeil 304. Somit entfällt nicht nur die mit der ersten Latenzzeit t1 zusammenhängende Wartedauer, sondern auch die mit der Datenübertragung über die Datenleitung 9 einhergehende Wartedauer. Entsprechend wird auch hier die erste Zeitdifferenz Δt reduziert.

Soll das entsprechende Datenübertragungsverfahren fortgeführt werden, so reicht das Datentransferbeschleunigungsmodul 11 die Antwortnachricht 10, angedeutet durch einen Pfeil 305, an das Systemschnittstellenmodul 4 des Quellsystems 2 weiter, sodass hier weiter Datentransferblöcke generiert werden. Je nach zeitlicher Überschneidung der Übertragung der Antwortnachrichten 10 und 13 kann hier das Datentransferbeschleunigungsmodul 11 auch warten, sodass anstelle einer Antwortnachricht 13 dann die Antwortnachricht 10 übertragen wird (nicht dargestellt).

Empfängt hingegen das Datentransferbeschleunigungsmodul 11 eine Negativ-Antwortnachricht (nicht dargestellt) vom Systemschnittstellenmodul 6, was gleichbedeutend damit ist, dass das Zielsystem 5 keine weiteren Informationen mehr annimmt, so kann das Datentransferbeschleunigungsmodul 11 besagte Negativ-Antwortnachricht an das Systemschnittstellenmodul 4 des Quellsystems 2 weitervermitteln, sodass das Quellsystem 2 das Erzeugen der Datentransferblöcke beendet oder zumindest pausiert, bis erneut eine Antwortnachricht 10 vom Zielsystem 5 empfangen wurde. Gleichzeitig löscht das Datentransferbeschleunigungsmodul 11 den Datentransferblockpuffer.

Figur 4 zeigt eine weitere Ausgestaltung des erfindungsgemäßen Informationstechnischen-Systems 1, bei der sowohl das Quellsystem 2, als auch das Zielsystem 5 jeweils über ein Datentransferbeschleunigungsmodul 11 verfügen. Die in den Figuren 2 und 3 beschriebenen Vorteile bezüglich der erforderlichen Zeitdauer zum Übertragen von Informationen aus dem Quellsystem 2 an das Zielsystem 5 werden somit kombiniert.

So ist es generell möglich, dass durch das kombinierte Vorsehen je eines Datentransferbeschleunigungsmoduls 11 im Quellsystem 2 und im Zielsystem 5 der Datentransferblockpuffer des Datentransferbeschleunigungsmoduls 11 im Zielsystem 5 schneller gefüllt werden kann. Dies hängt jedoch davon ab, ob bereits Datentransferblöcke vom Datentransferblockpuffer des Datentransferbeschleunigungsmoduls 11 im Quellsystem 2 enthalten sind sowie von der ersten Latenzzeit t1 und der Latenzzeit bei der Datenübertragung über die Datenleitung 9. In dem in Figur 4 gezeigten Ausführungsbeispiel ist der Datentransferblockpuffer des Datentransferbeschleunigungsmoduls 11 im Quellsystem 2 ursprünglich leer. Zudem ist die erste Latenzzeit t1 größer als die Latenzzeit der Datenübertragung über die Datenleitung 9. Somit kann das Datentransferbeschleunigungsmodul 11 im Quellsystem 2 erst dann wieder einen weiteren Datentransferblock an das Datentransferbeschleunigungsmodul 11 im Zielsystem 5 übertragen, sobald ein solcher Datentransferblock vom Systemschnittstellenmodul 4 weitergereicht wurde. Wäre die erste Latenzzeit t1 geringer als die Latenzzeit bei der Datenübertragung durch die Datenleitung 9, so würde sich hingegen beim Empfangen der Antwortnachricht 13 durch das Datentransferbeschleunigungsmodul 11 des Quellsystems 2 bereits ein Datentransferblock im Datentransferblockpuffer befinden, der dann direkt über die Datenleitung 9 an das Zielsystem 5 übertragen werden könnte.

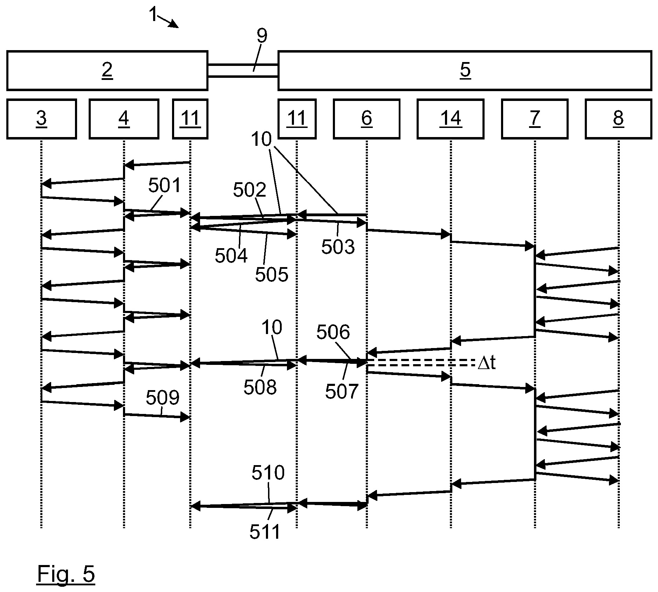

Figur 5 verdeutlicht ein Ausführungsbeispiel, bei denen bereits beide Datentransferblockpuffer zum Teil gefüllt sind, sowie im weiteren Verlauf vollständig gefüllt werden. Durch einen Pfeil 501 angedeutet wird ein weiterer Datentransferblock in den Datentransferblockpuffer des Datentransferbeschleunigungsmoduls 11 im Quellsystem 2 geschrieben.

Das Zielsystem 5 teilt dem Quellsystem 2 durch das Übertragen der Antwortnachricht 10 mit, dass es bereit ist zum Empfangen von Informationen. Da bereits entsprechende Datentransferblöcke im Datentransferblockpuffer des Datentransferbeschleunigungsmoduls 11 des Quellsystems 2 enthalten sind, kann direkt ein solcher Datentransferblock an das Zielsystem 5 übertragen werden, angedeutet durch einen Pfeil 502.

Dieser Datentransferblock wird dann, angedeutet durch einen Pfeil 503, vom Datentransferbeschleunigungsmodul 11 im Zielsystem 5 an das Systemschnittstellenmodul 6 übermittelt. Entsprechend übersendet das Datentransferbeschleunigungsmodul 11 des Zielsystems 5 eine Antwortnachricht 13 an das Quellsystem 2, angedeutet durch einen Pfeil 504.

Da im Quellsystem 2 wie bereits erwähnt Datentransferblöcke im Datentransferblockpuffer enthalten sind, kann das Datentransferbeschleunigungsmodul 11 des Quellsystems 2 direkt, angedeutet durch einen Pfeil 505, einen weiteren Datentransferblock an das Zielsystem 5 übermitteln. In dem hier gezeigten Ausführungsbeispiel ist nun der Datentransferblockpuffer des Datentransferbeschleunigungsmoduls 11 im Zielsystem 5 voll, sodass keine weiteren Antwortnachrichten 13 an das Quellsystem 2 mehr übermittelt werden. Da der Datentransferblockpuffer im Quellsystem 2 jedoch noch nicht voll ist, wird dieser weiter befüllt.

Angedeutet durch einen Pfeil 506 gibt das Systemschnittstellenmodul 6 die Antwortnachricht 10 aus, welche vom Datentransferbeschleunigungsmodul 11 des Zielsystems 5 empfangen wird. Das Datentransferbeschleunigungsmodul 11 des Zielsystems 5 kann dann unmittelbar, angedeutet durch einen Pfeil 507, einen weiteren Datentransferblock aus dem Datentransferblockpuffer auslesen und den weiteren Datentransferblock an das Systemschnittstellenmodul 6 übergeben. Hierdurch wird ein Platz im Datentransferblockpuffer des Datentransferbeschleunigungsmoduls 11 des Zielsystems 5 frei. Somit reicht das Datentransferbeschleunigungsmodul 11 des Zielsystems 5 die Antwortnachricht 10 an das Quellsystem 2 weiter, um das Übersenden eines weiteren Datentransferblocks zu bewirken, da es nun wieder einen Datentransferblock aufnehmen kann. Dieser wird durch eine entsprechende Informationsnachricht 15, angedeutet durch einen Pfeil 508, übersendet. Der Datentransferblockpuffer im Zielsystem 5 ist dann wieder voll, sodass keine weiteren Antwortnachrichten 13 mehr versendet werden.

Angedeutet durch einen Pfeil 509 läuft auch der Datentransferblockpuffer des Datentransferbeschleunigungsmoduls 11 des Quellsystems 2 voll. Erst nachdem das Datentransferbeschleunigungsmodul 11 des Quellsystems 2, angedeutet durch einen Pfeil 510, erneut eine Antwortnachricht 10 empfangen hat, kann, angedeutet durch einen Pfeil 511, ein weiterer Datentransferblock an das Zielsystem 5 übermittelt werden und entsprechend Platz im Datentransferblockpuffer im Quellsystem 2 geschaffen werden.

Figur 5 verdeutlicht zum einen durch die Pfeile 501 bis 505, wie sich der Datentransferblockpuffer des Datentransferbeschleunigungsmoduls 11 im Zielsystem 5 durch das Vorsehen jeweils eines Datentransferbeschleunigungsmoduls 11 im Quellsystem 2 und im Zielsystem 5 beschleunigen lässt. Zum anderen verdeutlicht Figur 5, dass trotz voller Datentransferblockpuffer beider Datentransferbeschleunigungsmodule 11 eine Zeitersparnis in der Datenübertragung möglich ist, da, wie durch den Pfeil 511 angedeutet, schneller ein Datentransferblock an das Zielsystem 5 übermittelt werden kann.

## Patentansprüche

1. Informationstechnisches-System (1), umfassend:
- ein Quellsystem (2), wiederum aufweisend einen Quell-Informationsspeicher sowie ein Dateilesemodul (3) und ein Systemschnittstellenmodul (4); und
- ein Zielsystem (5), wiederum aufweisend einen Ziel-Informationsspeicher sowie ein Systemschnittstellenmodul (6), ein Nutzlastpuffermodul (7) und ein Speicherzugangsmodul (8);
- das Quellsystem (2) und das Zielsystem (5) sind über eine bidirektionale Datenleitung (9) miteinander kommunikativ gekoppelt;
- das Quellsystem (2) ist dazu eingerichtet nach dem Empfangen einer Antwortnachricht (10) vom Zielsystem (5) mittels des Dateilesemoduls (3) den Quell-Informationsspeicher auszulesen, aus dem Quell-Informationsspeicher ausgelesene Informationen zu einem Datentransferblock zu packen und diesen über die Datenleitung (9) an das Zielsystem (5) zu übersenden; wobei
- das Quellsystem (2) zum Auslesen des Quell-Informationsspeichers und Packen des Datentransferblocks eine erste Latenzzeit (t1) benötigt;
- das Zielsystem (5) ist dazu eingerichtet den Datentransferblock zu empfangen, die darin enthaltenen Informationen zu extrahieren und in das Nutzlastpuffermodul (7) zu schreiben, daraufhin eine Antwortnachricht (10) zu erzeugen und mittels des Speicherzugangsmoduls (8) die Informationen aus dem Nutzlastpuffermodul (7) in den Ziel-Informationsspeicher zu übertragen; wobei
- das Zielsystem (5) zum Extrahieren und Schreiben der Informationen sowie zum Erzeugen der Antwortnachricht (10) eine zweite Latenzzeit (t2) benötigt,
**dadurch gekennzeichnet, dass**
das Quellsystem (2) und/oder das Zielsystem (5) ferner jeweils ein Datentransferbeschleunigungsmodul (11) umfassen, wiederum aufweisend einen Datentransferblockpuffer; wobei
- das Datentransferbeschleunigungsmodul (11) im Quellsystem (2) zwischen Datenleitung (9) und Systemschnittstellenmodul (4) angeordnet ist und dazu eingerichtet ist einen ersten Datentransferblock zu empfangen und über die Datenleitung (9) zu versenden, nach Empfangen eines Datentransferblocks selbst eine Antwortnachricht (12) an das Systemschnittstellenmodul (4) auszugeben, um das Packen wenigstens eines weiteren Datentransferblocks zu bewirken, den weiteren Datentransferblock im Datentransferblockpuffer zwischenzuspeichern und einen im Datentransferblockpuffer zwischengespeicherten weiteren Datentransferblock nach Empfangen einer Antwortnachricht (10) vom Zielsystem (5) an dieses zu übersenden; und wobei
- das Datentransferbeschleunigungsmodul (11) im Zielsystem (5) zwischen Datenleitung (9) und Systemschnittstellenmodul (6) angeordnet ist und dazu eingerichtet ist einen ersten Datentransferblock zu empfangen und an das Systemschnittstellenmodul (6) weiterzuleiten, nach Empfangen eines Datentransferblocks selbst eine Antwortnachricht (13) auszugeben und diese über die Datenleitung (9) zu versenden, um das Übersenden wenigstens eines weiteren Datentransferblocks vom Quellsystem (2) an das Zielsystem (5) zu bewirken, wenigstens einen weiteren Datentransferblock im Datentransferblockpuffer zwischenzuspeichern und nach Empfangen einer Antwortnachricht (10) vom Systemschnittstellenmodul (6) einen weiteren Datentransferblock an das Systemschnittstellenmodul (6) weiterzuleiten oder nach Empfangen einer Negativ-Antwortnachricht vom Systemschnittstellenmodul (6) die Negativ-Antwortnachricht über die Datenleitung (9) zu versenden und sämtliche weiteren Datentransferblöcke aus dem Datentransferblockpuffer zu löschen.

2. Informationstechnisches-System (1) nach Anspruch 1,
**dadurch gekennzeichnet, dass**
das Datentransferbeschleunigungsmodul (11) im Quellsystem (2) und/oder im Zielsystem (5) ferner dazu eingerichtet ist so lange Antwortnachrichten (12, 13) auszugeben, bis der jeweilige Datentransferblockpuffer voll ist.

3. Informationstechnisches-System (1) nach Anspruch 1 oder 2,
**dadurch gekennzeichnet, dass**
das Quellsystem (2) und das Zielsystem (5) dazu eingerichtet sind Unified Diagnostic Services als Kommunikationsprotokoll zu verwenden.

4. Informationstechnisches-System (1) nach einem der Ansprüche 1 bis 3,
**dadurch gekennzeichnet, dass**
der Quell-Informationsspeicher und/oder der Ziel-Informationsspeicher Flashspeicher umfasst.

5. Informationstechnisches-System (1) nach einem der Ansprüche 1 bis 4,
**dadurch gekennzeichnet, dass**
das Zielsystem (5) als eingebettetes System ausgeführt ist.

6. Informationstechnisches-System (1) nach einem der Ansprüche 1 bis 5,
**dadurch gekennzeichnet, dass**
das Quellsystem (2) als Server oder Serververbund ausgeführt ist und zumindest ein Teil der Datenleitung (9) durch das Internet verläuft.

7. Fahrzeug,
**gekennzeichnet durch**
ein Zielsystem (5) eines Informationstechnischen-Systems (1) nach einem der Ansprüche 1 bis 6.

8. Verfahren zum Einbringen einer Aktualisierung auf ein Zielsystem (5) unter der Nutzung eines Informationstechnischen-Systems (1) nach einem der Ansprüche 1 bis 6,
**dadurch gekennzeichnet, dass**
mittels der Aktualisierung ein Parameterdatensatz, ein Anwendungsprogramm und/oder eine Firmware im Zielsystem (5) angepasst oder in das Zielsystem (5) neu eingebracht wird.

## Claims

1. Information technology system (1), comprising:
- a source system (2), in turn comprising a source information memory and a file reading module (3) and a system interface module (4); and
- a target system (5), in turn comprising a target information memory and a system interface module (6), a payload buffer module (7) and a memory access module (8);
- the source system (2) and the target system (5) are communicatively coupled to one another via a bidirectional data line (9);
- the source system (2) is configured to read the source information memory by means of the file reading module (3) after receiving a response message (10) from the target system (5), to pack information read from the source information memory into a data transfer block and to send this to the target system (5) via the data line (9);
- the source system (2) requiring a first latency time (t1) to read the source information memory and pack the data transfer block;
- the target system (5) being configured to receive the data transfer block, to extract the information contained therein and to write it into the payload buffer module (7), then to generate a response message (10) and to transfer the information from the payload buffer module (7) to the target information memory by means of the memory access module (8);
- the target system (5) requiring a second latency time (t2) to extract and write the information and to generate the response message (10),
**characterized in that**
the source system (2) and/or the target system (5) each further comprise a data transfer acceleration module (11), in turn comprising a data transfer block buffer;
- the data transfer acceleration module (11) being arranged in the source system (2) between the data line (9) and the system interface module (4) and being configured to receive a first data transfer block and to send it via the data line (9), to output a response message (12) itself to the system interface module (4) after receiving a data transfer block in order to cause the packing of at least one further data transfer block, to temporarily store the further data transfer block in the data transfer block buffer, and to transmit a further data transfer block temporarily stored in the data transfer block buffer to the target system (5) after receiving a response message (10) from the target system; and
- the data transfer acceleration module (11) being arranged in the target system (5) between the data line (9) and the system interface module (6) and being configured to receive a first data transfer block and forward it to the system interface module (6), to output a response message (13) itself after receiving a data transfer block and to send said response message via the data line (9) in order to cause at least one further data transfer block to be sent from the source system (2) to the target system (5), to temporarily store at least one further data transfer block in the data transfer block buffer and, after receiving a response message (10) from the system interface module (6), to forward a further data transfer block to the system interface module (6), or, after receiving a negative response message from the system interface module (6), to send the negative response message via the data line (9) and to delete all further data transfer blocks from the data transfer block buffer.

2. Information technology system (1) according to claim 1,
**characterized in that**
the data transfer acceleration module (11) in the source system (2) and/or in the target system (5) is further configured to output response messages (12, 13) until the particular data transfer block buffer is full.

3. Information technology system (1) according to claim 1 or 2,
**characterized in that**
the source system (2) and the target system (5) are configured to use Unified Diagnostic Services as a communication protocol.

4. Information technology system (1) according to any of claims 1 to 3,
**characterized in that**
the source information memory and/or the target information memory comprises flash memory.

5. Information technology system (1) according to any of claims 1 to 4,
**characterized in that**
the target system (5) is designed as an embedded system.

6. Information technology system (1) according to any of claims 1 to 5,
**characterized in that**
the source system (2) is designed as a server or server network and at least part of the data line (9) runs through the Internet.

7. Vehicle,
**characterized by**
a target system (5) of an information technology system (1) according to any of claims 1 to 6.

8. Method for introducing an update to a target system (5) using an information technology system (1) according to any of claims 1 to 6,
**characterized in that**
by means of the update, a parameter data set, an application program and/or a firmware in the target system (5) is adapted or newly introduced into the target system (5).

## Revendications

1. Système de technologie de l'information (1) comprenant :
- un système source (2), présentant à son tour une mémoire d'informations source ainsi qu'un module de lecture de fichiers (3) et un module d'interface système (4) ; et
- un système cible (5), présentant à son tour une mémoire d'informations cible ainsi qu'un module d'interface système (6), un module tampon de charge utile (7) et un module d'accès à la mémoire (8) ;
- le système source (2) et le système cible (5) sont couplés entre eux de manière communicative par l'intermédiaire d'une ligne de données (9) bidirectionnelle ;
- le système source (2) est conçu pour, après la réception d'un message de réponse (10) du système cible (5), lire la mémoire d'informations source par le biais du module de lecture de fichiers (3), compacter des informations lues dans la mémoire d'informations source en un bloc de transfert de données et transmettre celui-ci au système cible (5) par l'intermédiaire de la ligne de données (9) ; dans lequel
- le système source (2) a besoin d'un premier temps de latence (t1) pour lire la mémoire d'informations source et compacter le bloc de transfert de données ;
- le système cible (5) est conçu pour recevoir le bloc de transfert de données, extraire les informations qu'il contient et les écrire dans le module tampon de charge utile (7), générer ensuite un message de réponse (10) et transférer, par le biais du module d'accès à la mémoire (8), les informations du module tampon de charge utile (7) dans la mémoire d'informations cible ; dans lequel
- le système cible (5) a besoin d'un second temps de latence (t2) pour extraire et écrire les informations et pour générer le message de réponse (10),
**caractérisé en ce que**
le système source (2) et/ou le système cible (5) comprennent en outre respectivement un module d'accélération de transfert de données (11), présentant à son tour un tampon de bloc de transfert de données ; dans lequel
- le module d'accélération de transfert de données (11) est agencé dans le système source (2) entre la ligne de données (9) et le module d'interface système (4) et est conçu pour recevoir un premier bloc de transfert de données et l'envoyer par l'intermédiaire de la ligne de données (9), pour émettre lui-même un message de réponse (12) au module d'interface système (4) après réception d'un bloc de transfert de données, pour effectuer le compactage d'au moins un autre bloc de transfert de données, pour mémoriser temporairement l'autre bloc de transfert de données dans le tampon de bloc de transfert de données et pour transmettre un autre bloc de transfert de données mémorisé temporairement dans le tampon de bloc de transfert de données au système cible (5) après réception d'un message de réponse (10) de ce dernier ; et dans lequel
- le module d'accélération de transfert de données (11) est agencé dans le système cible (5) entre la ligne de données (9) et le module d'interface système (6) et est conçu pour recevoir un premier bloc de transfert de données et le transmettre au module d'interface système (6), pour émettre lui-même un message de réponse (13) après réception d'un bloc de transfert de données et pour l'envoyer par l'intermédiaire de la ligne de données (9) afin de provoquer la transmission d'au moins un autre bloc de transfert de données du système source (2) au système cible (5), mémoriser temporairement au moins un autre bloc de transfert de données dans le tampon de bloc de transfert de données et, après réception d'un message de réponse (10) du module d'interface système (6), retransmettre un autre bloc de transfert de données au module d'interface système (6) ou, après réception d'un message de réponse négatif du module d'interface système (6), envoyer le message de réponse négatif par l'intermédiaire de la ligne de données (9) et effacer tous les autres blocs de transfert de données du tampon de bloc de transfert de données.

2. Système de technologie de l'information (1) selon la revendication 1,
**caractérisé en ce que**
le module d'accélération de transfert de données (11) dans le système source (2) et/ou dans le système cible (5) est en outre conçu pour émettre des messages de réponse (12, 13) jusqu'à ce que le tampon de bloc de transfert de données respectif soit plein.

3. Système de technologie de l'information (1) selon la revendication 1 ou 2,
**caractérisé en ce que**
le système source (2) et le système cible (5) sont conçus pour utiliser des services de diagnostic unifiés en tant que protocole de communication.

4. Système de technologie de l'information (1) selon l'une des revendications 1 à 3,
**caractérisé en ce que**
la mémoire d'informations source et/ou la mémoire d'informations cible comprennent une mémoire flash.

5. Système de technologie de l'information (1) selon l'une des revendications 1 à 4,
**caractérisé en ce que**
le système cible (5) est réalisé sous la forme d'un système embarqué.

6. Système de technologie de l'information (1) selon l'une des revendications 1 à 5,
**caractérisé en ce que**
le système source (2) est réalisé sous forme de serveur ou de réseau de serveurs et au moins une partie de la ligne de données (9) passe par l'Internet.

7. Véhicule,
**caractérisé par**
un système cible (5) d'un système de technologie de l'information (1) selon l'une des revendications 1 à 6.

8. Procédé d'introduction d'une mise à jour sur un système cible (5) en utilisant un système de technologie de l'information (1) selon l'une des revendications 1 à 6,
**caractérisé en ce que**
par le biais de la mise à jour, un jeu de données de paramètres, un programme d'application et/ou un micrologiciel est adapté dans le système cible (5) ou est nouvellement introduit dans le système cible (5).
